(19) Europäisches Patentamt / European Patent Office / Office européen des brevets

(11) **EP 2 795 277 B1**

(12) **FASCICULE DE BREVET EUROPEEN**

(45) Date de publication et mention de la délivrance du brevet:
**13.04.2016 Bulletin 2016/15**

(51) Int Cl.:
*G01K 17/00* (2006.01)          *G01N 25/18* (2006.01)
*G01K 17/08* (2006.01)          *G01K 19/00* (2006.01)

(21) Numéro de dépôt: **12805697.5**

(22) Date de dépôt: **20.12.2012**

(86) Numéro de dépôt international:
**PCT/EP2012/076276**

(87) Numéro de publication internationale:
**WO 2013/092792 (27.06.2013 Gazette 2013/26)**

(54) **FLUXMETRE AUTO-ETALONNE**

AUTOMATISCH KALIBRIERTER DURCHFLUSSMESSER

SELF-CALIBRATED FLOW METER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2011 FR 1162216**

(43) Date de publication de la demande:
**29.10.2014 Bulletin 2014/44**

(73) Titulaires:
• **Institut de Radioprotection et de Sûreté Nucléaire**
  **92260 Fontenay aux Roses (FR)**
• **Université d'Aix Marseille**
  **13007 Marseille (FR)**

(72) Inventeurs:
• **PONS, Serge**
  **F-83560 Vinon sur Verdon (FR)**
• **COUTIN, Mickaël**
  **F-04100 Manosque (FR)**
• **LUCIANI, Sébastien**
  **F-13002 Marseille (FR)**
• **LE NILIOT, Christophe**
  **13009 Marseille (FR)**
• **RIGOLLET, Fabrice**
  **13100 Aix-en-Provence (FR)**

(74) Mandataire: **Regimbeau**
  **20, rue de Chazelles**
  **75847 Paris Cedex 17 (FR)**

(56) Documents cités:
JP-A- 7 146 189          US-A- 5 112 136
US-A1- 2010 080 260

**Description**

DOMAINE TECHNIQUE GENERAL

La présente invention concerne le domaine de la mesure de transferts thermiques.

Plus précisément, elle concerne un fluxmètre auto-étalonné pour la mesure d'un flux de chaleur traversant la surface d'un matériau.

ETAT DE L'ART

Le flux thermique (ou flux de chaleur) $\Phi$ est défini par la puissance en Watts qui traverse une section lors d'un transfert thermique. Il dépend des propriétés thermophysiques du matériau dans lequel la chaleur se transmet, notamment sa conductivité thermique k (notée également $\lambda$, et exprimée en $W.m^{-1}.K^{-1}$), elle-même reliée à la diffusivité thermique a (notée également $\alpha$, et exprimée en $m^2.s^{-1}$) et à la capacité calorifique volumique $\rho C_P$ (exprimée en $J.m^{-3}.K^{-1}$) par l'expression $\alpha = \lambda / \rho C_p$.

Les dispositifs permettant de mesurer un tel flux, appelés fluxmètres, sont communément employés pour des études expérimentales dans le domaine des matériaux, et plus particulièrement pour déterminer le stress thermique appliqué à des parois soumises à une forte source de chaleur, typiquement un incendie. De nombreuses autres applications, allant de l'évaluation des performances de l'isolation d'un local à la détection d'incendie sont possibles.

Deux types de fluxmètres sont principalement connus et commercialisés :

- Les fluxmètres inertiels refroidis, activement ou par pertes, pour la mesure directe des flux incidents sur une paroi ;
- Les fluxmètres à distorsion de flux pour la mesure directe des flux transmis à la paroi.

Les fluxmètres inertiels nécessitent la connaissance de l'état de surface et des propriétés thermophysiques du matériau, ainsi que leur évolution au cours du temps. Cela nécessite l'utilisation d'un banc de calibration très élaboré et des opérations de longue durée, qui malgré tout ne permettent que des mesures approximatives des flux. Le brevet japonais JP 7146189 décrit un exemple de tel fluxmètre inertiel, ici placé à l'intérieur d'une paroi.

Les fluxmètres à distorsion comprennent un capteur plan que l'on vient coller à la paroi. Ce capteur présente les inconvénients d'être intrusif (il perturbe le flux thermique par ajout d'une résistance thermique) et fragile (les capteurs sont rapidement altérés ou détruits et doivent être remplacés). En outre, l'analyse des mesures obtenues par ces fluxmètres lors de différents programmes de recherche a donné lieu à des interrogations sur leur validité. Ils semblent dériver de leur courbe d'étalonnage et doivent donc faire l'objet de réétalonnages fréquents.

Il serait par conséquent souhaitable de disposer d'un fluxmètre qui soit particulièrement fiable, et qui permette de se passer de phases fastidieuses d'étalonnage et réétalonnage.

La demande de brevet japonaise JP 2002/131258 propose une méthode de résolution de l'équation de la chaleur qui permette une mesure in-situ de certains paramètres thermophysiques, lesquels peuvent être réutilisés par le fluxmètre. On remarque cependant que cette méthode ne permet pas de suivre l'évolution des paramètres au cours du temps, et qu'un étalonnage initial reste nécessaire. D'autres mesures de transferts thermiques sont décrites dans les demandes de brevet US 5 112 136 A et US 2010/080260.

Les fluxmètres actuels sont donc encore à améliorer.

PRESENTATION DE L'INVENTION

La présente invention vise à obtenir un fluxmètre thermique qui soit capable de s'auto-étalonner en estimant les propriétés thermophysiques du matériau testé.

A cet effet, la présente invention se rapporte selon un premier aspect à un procédé d'estimation des propriétés thermophysiques d'un matériau, au moins un capteur de température et une source ponctuelle de chaleur étant intégrés dans ledit matériau, la distance entre l'au moins un capteur de température et la source ponctuelle de chaleur étant connue, le procédé comprenant des étapes de :

- expression de la température théorique en fonction du temps au niveau de l'au moins un capteur de température lorsque la source ponctuelle de chaleur est activée, ladite expression dépendant des paramètres thermophysiques du matériau ;
- acquisition d'une pluralité de mesures de température par l'au moins un capteur de température au cours d'un intervalle de temps pendant lequel la source ponctuelle de chaleur est activée ;
- détermination des valeurs des paramètres thermophysiques du matériau telles que l'écart entre les températures théoriques obtenues via ladite expression et les températures effectivement mesurées soit minimal.

Selon d'autres caractéristiques avantageuses et non limitatives :

- lesdites propriétés thermophysiques du matériau comprennent la conductivité thermique $k$ du matériau et/ou la diffusivité thermique a du matériau ;
- l'écart entre les $F$ températures théoriques obtenues $\{\eta(d,t_i,\beta_1,\beta_2)\}_{i\in[1,F]}$ et les $F$ températures effectivement mesurées $\{Y(d,t_i)\}_{i\in[1,F]}$ à minimiser est exprimé par la formule $J(\beta_1,\beta_2) = \sum_{i=1}^{F}\left(Y(d,t_i) - \eta(d,t_i,\beta_1,\beta_2)\right)^2$ , $d$ étant ladite distance entre l'au moins un capteur de température et la source ponctuelle de chaleur, $\beta_1$ étant un paramètre inversement proportionnel à la conductivité thermique $k$, et $\beta_2$ étant un paramètre proportionnel à la diffusivité thermique $a$.

Un deuxième aspect de l'invention concerne un procédé de mesure d'un flux de chaleur traversant une surface d'un matériau, au moins un capteur de température et une source ponctuelle de chaleur étant intégrés dans ledit matériau, la distance entre l'au moins un capteur de température et la source ponctuelle de chaleur et la distance entre l'au moins un capteur de température et la surface du matériau traversée par le flux de chaleur étant connues, le procédé comprenant des étapes de :

- Mesure au cours du temps d'une pluralité de températures internes du matériau par l'au moins un capteur de température ;
- estimation de la conductivité thermique $k$ et de la diffusivité thermique $a$ du matériau par la mise en oeuvre du procédé d'estimation des propriétés thermophysiques d'un matériau selon le premier aspect de l'invention ;
- détermination du flux de chaleur traversant la surface du matériau à partir des températures internes mesurées en fonction du temps par l'au moins un capteur de température, de la conductivité thermique k et de la diffusivité thermique a estimées du matériau.

Selon d'autres caractéristiques avantageuses et non limitatives :

- au moins deux températures internes sont mesurées au cours du temps par au moins deux capteurs de température, l'un étant sensiblement plus éloigné de la surface du matériau traversée par le flux de chaleur que l'autre, le procédé comprenant en outre une étape de vérification de la condition aux limites à partir de la température interne mesurée en fonction du temps par le capteur de température le plus éloigné de la surface du matériau.

Un troisième aspect de l'invention concerne un fluxmètre pour la mesure d'un flux de chaleur traversant une surface d'un matériau caractérisé en ce qu'il comprend :

- au moins un capteur de température intégré dans un échantillon du matériau ;
- une source ponctuelle de chaleur contrôlable, également intégrée dans l'échantillon du matériau ;
- des moyens d'acquisition d'une pluralité de mesures de température par l'au moins un capteur de température au cours d'un intervalle de temps. ;
- des moyens de traitement de la pluralité de mesures de température acquises aptes à mettre en oeuvre le procédé de mesure d'un flux de chaleur traversant la surface dudit matériau selon le deuxième aspect de l'invention.

Selon d'autres caractéristiques avantageuses et non limitatives :

- le fluxmètre comprend un premier capteur de température et un deuxième capteur de température, le premier capteur de température étant plus proche de la surface du matériau traversée par le flux de chaleur que le deuxième capteur de température, le premier capteur de température étant à une distance connue de la surface du matériau traversée par le flux de chaleur, le deuxième capteur de température étant à une distance connue de la source ponctuelle de chaleur, les mesures du premier capteur étant utilisées pour l'estimation du flux de chaleur, et les mesures du deuxième capteur étant utilisées pour l'estimation des propriétés thermophysiques du matériau ;
- le fluxmètre comprend un troisième capteur de température, de position par rapport à la surface connue, le troisième capteur de température étant sensiblement plus éloigné de la surface du matériau traversée par le flux de chaleur que les premier et deuxième capteurs, les mesures du troisième capteur étant utilisées pour connaître une condition aux limites du matériau ;
- le troisième capteur de température est à une distance connue de la source ponctuelle de chaleur, en particulier la même que le deuxième capteur de température, des mesures du troisième capteur étant comparées avec des mesures du deuxième capteur afin de contrôler l'homogénéité du matériau ;

- les mesures du deuxième capteur sont également utilisées pour l'estimation du flux de chaleur lorsque la source ponctuelle est désactivée ;
- le ou les capteurs de température sont des thermocouples et la source ponctuelle de chaleur est un fil chauffant, les axes des thermocouples et du fil chauffant étant situés sensiblement sur le même plan perpendiculaire à la surface du matériau.

## PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'un mode de réalisation d'un fluxmètre selon l'invention ;

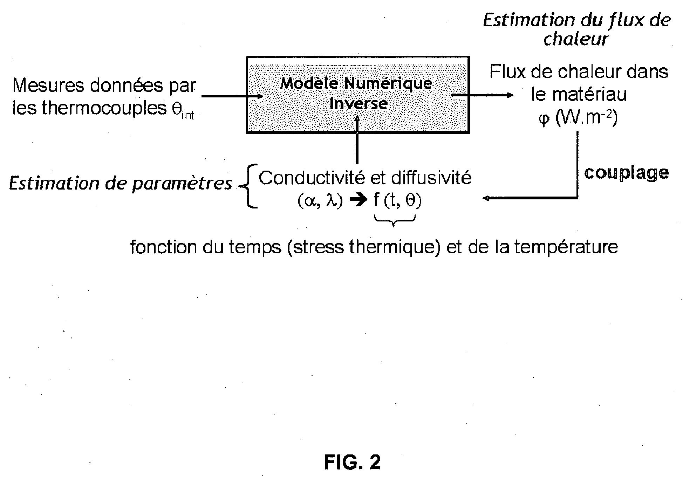

- la figure 2 représente schématiquement le procédé d'estimation d'un flux de chaleur entrant selon l'invention ;
- les figures 3a et 3b sont deux graphiques obtenus lors d'un test du procédé d'estimation des paramètres thermophysiques d'un matériau selon l'invention, représentant respectivement les températures théorique et mesurée sur un intervalle de temps donné, et leur écart sur le même intervalle de temps ;
- la figure 4 représente un exemple d'installation pour tester le procédé d'estimation d'un flux de chaleur entrant dans un matériau ;
- les figures 5a et 5b sont deux graphiques obtenus lors d'un test du procédé d'estimation d'un flux de chaleur entrant dans un matériau selon l'invention, représentant respectivement la puissance thermique à laquelle le matériau a été soumis en fonction du temps, et le flux de chaleur entrant dans le matériau obtenu.

## DESCRIPTION DETAILLEE

### Architecture générale

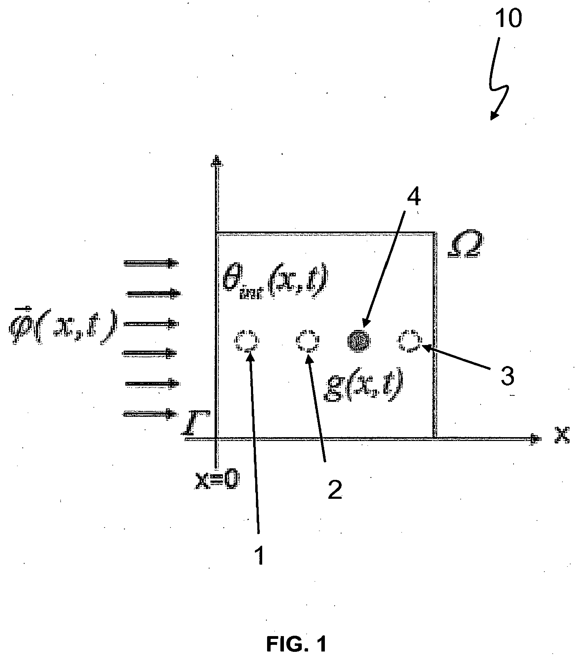

En référence à la figure 1, l'invention concerne un fluxmètre 10 pour la mesure d'un flux de chaleur $\varphi(t)$ traversant une surface r d'un matériau $\Omega$. Il est à noter que $\varphi(t)$ ne correspond pas à un flux au sens strict, mais à une « densité de flux surfacique » au niveau de $\Gamma$, i.e. $\Phi$ par unité de surface, exprimée en $(W.m^{-2})$. Le flux « complet » $\Phi$, qui correspond comme expliqué au transfert thermique Q total qui pénètre dans le matériau $\Omega$ par unité de temps, fait en effet intervenir la notion de surface d'échange, difficile à quantifier. On comprendra que l'invention concerne aussi bien la mesure d'un flux que d'une densité de flux, et on utilisera la notation $\varphi(t)$ dans la suite de la présente description.

Par ailleurs, par «traversant la surface » du matériau, on comprendra à la fois entrant dans le matériau ou sortant du matériau. En effet, bien que le flux soit dans la majorité des cas entrant (lorsque le matériau est soumis à une source de chaleur), il peut être sortant par exemple lorsque le matériau a emmagasiné beaucoup d'énergie et qu'il n'en reçoit plus (source intense pendant une durée limitée). Cette restitution de chaleur se traduit par un flux de chaleur mesuré négatif. Ainsi, il peut être nécessaire de faire la distinction entre flux entrant et flux sortant, à moins que l'on considère que le flux de chaleur entrant peut être positif ou négatif, auquel cas la précision ajoutée n'a pas lieu d'être. Dans la suite de la présente description, on considérera un flux entrant positif par commodité.

Différentes configurations possibles du fluxmètre 10 seront décrites dans la suite de la présente description, mais de façon générale il comprend :

- au moins un (avantageusement deux, et encore plus avantageusement trois) capteur de température 1, 2, 3 intégré dans un échantillon du matériau $\Omega$, lesquels sont par exemple des thermocouples ;
- une source ponctuelle de chaleur 4 contrôlable (par exemple un fil chauffant par effet joule), également intégrée dans l'échantillon du matériau $\Omega$;
- des moyens d'acquisition d'une pluralité de mesures de température par l'au moins un capteur de température au cours d'un intervalle de temps ;
- des moyens de traitement de la pluralité de mesures de température acquises.

Il est à noter que le matériau $\Omega$ est à comprendre comme invariant selon toute direction orthogonale à un axe $x$ (orthogonal à la surface $\Gamma$) selon lequel le flux est orienté. Par « ponctuel », on comprendra ponctuel dans un plan orthogonal à la surface $\Gamma$, tel le plan de coupe $(xOz)$ représenté sur la figure 1. Des capteurs de température 1, 2, 3 et/ou une source de chaleur 4 s'étendant selon une direction parallèle à la surface $\Gamma$ ($z$ dans la figure 1) sont donc bien « ponctuels ». Si le ou les capteurs de température 1, 2, 3 sont des thermocouples et la source ponctuelle de chaleur 4 un fil chauffant, leurs axes sont avantageusement situés sensiblement sur le même plan perpendiculaire à la surface

Γ du matériau Ω.

Les moyens d'acquisition et de traitement (non représentés) consistent par exemple en un ordinateur comprenant un processeur, un espace de stockage, une interface pour relier les capteurs 1, 2, 3 au processeur, et une interface homme machine pour récupérer les résultats.

La technique de mesure est basée sur les méthodes inverses comme il sera montré plus loin. En général les deux types de problèmes inverses, estimation d'un flux de chaleur et estimation des propriétés thermophysiques, sont bien dissociées. Ces méthodes inverses utilisent d'ailleurs des techniques numériques différentes. L'originalité du fluxmètre 10 selon l'invention est de regrouper les deux approches sur le même échantillon.

Cette technique permet de connaître en temps réel les propriétés thermophysiques à appliquer au calcul du flux de chaleur à l'aide des mesures de température par le ou les capteurs 1, 2, 3 dans le matériau Ω exposé à la source de chaleur.

*Principe général d'estimation d'un flux de chaleur*

On cherche à évaluer le flux de chaleur $\varphi(t)$ transmis au matériau à l'aide d'une mesure interne de chaleur $\theta$ au niveau d'un capteur de température. Afin de remonter à ce flux de chaleur traversant, on doit résoudre un problème inverse de conduction de la chaleur (PICC). Ce type de problème, encore appelé problème de complétion de données, appartient à la catégorie des problèmes inverses d'estimation de conditions aux limites inconnues.

Considérons le domaine $\Omega$ de frontière $\Gamma$ avec la variable d'espace x (problème monodimensionnel) et la variable de temps t. L'équation de la chaleur du système thermique s'écrit :

$$\rho C_p \left( \frac{\partial \theta(x,t)}{\partial t} \right) = \vec{\nabla} \cdot \left( \lambda \vec{\nabla} \theta(x,t) \right) \text{ avec comme conditions aux limites :}$$

    1. Condition sur la surface $\Gamma$ à t>0 d'après la loi de Fourier :

$$-\lambda \left( \frac{\partial \theta(x,t)}{\partial x} \right)_{x=0} = \varphi(x=0,t) = \varphi_{surf}(t) \text{, c'est-à-dire simplement } \varphi(t) \text{ ;}$$

    2. Condition sur la surface opposée à r à t>0, soit milieu infini, soit conditions de flux connues, soit conditions de température connues (mesure) ;
    3. Condition initiale : $\theta(x,0) = \theta_0$ ou $\theta(x,0) = f(x)$ dans le domaine $\Omega$ à t=0.

La condition aux limites sur la surface $\Gamma$ est ici l'inconnue. Afin d'optimiser la résolution de l'équation de la chaleur et d'obtenir le flux de chaleur en temps réel, on va chercher à se ramener à un système boite noire entrée-sortie, avec en entrée la température interne donnée par le capteur 1, 2, 3 $\theta_{int}(x,t)$ et en sortie la densité de flux de chaleur $\varphi(t)$ traversant la surface $\Gamma$. On cherche à exprimer la fonction de transfert permettant de relier les deux grandeurs en utilisant la théorie des systèmes linéaires dynamiques invariants.

Dans le cas d'un système linéaire invariant, on peut exprimer la sortie du système comme étant la convolution de l'entrée avec la réponse impulsionnelle h(t) du système plus la condition initiale.

Le système thermique n'étant pas homogène (le flux de chaleur dépend de la variable t), nous devons faire un travail supplémentaire. Afin d'appliquer la théorie des systèmes linéaires à notre problème de diffusion de la chaleur, nous allons utiliser le théorème de Duhamel : la solution d'un problème initial aux conditions aux limites non homogènes peut être exprimé en fonction de la solution du même problème avec des conditions aux limites homogènes. En connaissant la réponse impulsionnelle du système h(t), on peut retrouver la forme déduite de la théorie des systèmes linéaires.

La réponse impulsionnelle de notre système étant donnée par dérivation temporelle de la réponse indicielle $\phi(t)$. L'intégrale de Duhamel n'est autre que l'application de cette théorie à l'équation de la chaleur. Ainsi, si $X_1$ est le lieu de l'observation et $X_2$ le lieu de la sollicitation, le Théorème de Duhamel (principe de superposition) amène à :

$$\text{Entrée} \qquad\qquad \text{Sortie}$$

$$\theta_{int}(x,t) = \theta(t_0) + h(x_1,t) \otimes \varphi(x_2,t) \qquad\qquad h(x_1,t-\tau) = -\frac{d\phi(x_1,t-\tau)}{d\tau}$$

$$\theta_{int}(x,t) = \theta_{int}(x,0) + \int_0^t \varphi(x,\tau) \cdot h(x,t-\tau) \cdot d\tau$$

$$\theta_{int}(x,t) = \theta_{int}(x,0) + \int_0^t \varphi(x,\tau) \cdot \left( -\frac{d\phi(x,t-\tau)}{d\tau} \right) d\tau$$

En discrétisant le temps à l'aide d'un pas constant, égal pour l'intégration et la dérivation, on peut exprimer à l'aide d'une matrice l'intégrale de Duhamel et se ramener au système matriciel suivant :

$$\Delta\theta = D \cdot Q$$

$\Delta\theta$ est le vecteur composé des températures internes mesurées (par un ou plusieurs des capteurs 1, 2, 3 comme il sera montré plus loin) moins la température initiale, Q le vecteur composé du flux de chaleur entrant et D est une matrice fabriquée à l'aide de la réponse indicielle $\phi(t)$ de notre système thermique.

Cette méthode offre d'excellents résultats. L'homme du métier saura toutefois mettre en oeuvre d'autres méthodes de calcul du flux en fonction de mesures de température et des paramètres thermophysiques du matériau.

*Procédé d'estimation des propriétés thermophysiques*

Selon un premier aspect, l'invention concerne un procédé d'estimation des propriétés thermophysiques d'un matériau $\Omega$, grâce auxquelles on va pouvoir calculer la réponse indicielle manquante dans le calcul précédent. Ces propriétés thermophysiques comprennent avantageusement la conductivité thermique $k$ du matériau $\Omega$ et/ou la diffusivité thermique a du matériau $\Omega$. L'invention n'est pas limitée à ces paramètres, et pourra par exemple comprendre l'estimation de $\rho Cp$.

Ce procédé utilise la source ponctuelle de chaleur 4 intégrée dans le matériau $\Omega$, la distance entre l'au moins un capteur de température 1, 2, 3 et la source ponctuelle de chaleur 4 doit être connue. Sachant que la source de chaleur est contrôlée, on sait exprimer les températures que l'on s'attend à mesurer en fonction des paramètres thermophysiques recherchés.

Le procédé comprend des étapes de :

- expression de la température théorique en fonction du temps au niveau de l'au moins un capteur de température 1, 2, 3 lorsque la source ponctuelle de chaleur 4 est activée, ladite expression dépendant des paramètres thermophysiques du matériau $\Omega$ ;
- acquisition d'une pluralité de mesures de température par l'au moins un capteur de température 1, 2, 3 au cours d'un intervalle de temps pendant lequel la source ponctuelle de chaleur 4 est activée ;
- détermination des valeurs des paramètres thermophysiques du matériau $\Omega$ telles que l'écart entre les températures théoriques obtenues via ladite expression et les températures effectivement mesurées soit minimal.

La température $\theta$ est mesurée à l'instant t par un capteur 1, 2, 3 placé à une distance d de la source de chaleur 4. Ce fil chauffant est soumis à un échelon de flux de chaleur linéique constant g (W.m$^{-1}$) et est supposé être dans un milieu infini ce qui est le cas lorsque l'on travaille aux temps t courts ($t_{expérience}$ < 300 s). L'augmentation de température théorique est en particulier donnée par l'équation :

$$\eta(t) = \theta(t) - \theta_0 = \frac{-g}{4\pi k} E_I\left(\frac{-d^2}{4at}\right) \text{ avec } -E_I(-x) = \int_x^{+\infty} \frac{e^{-u}}{u} du$$

Dans cette équation, qui se déduit de l'équation de la chaleur, $\theta_0$ est la température initiale en Kelvins, $k$ la conductivité thermique en $W.m^{-1}.K^{-1}$, a la diffusivité en $m^2.s^{-1}$, $g$ la puissance linéique de la source 4 en $W.m^{-1}$ et $E_l$ est la fonction exponentielle intégrale.

En remarquant que l'expression de la température théorique fait apparaître deux paramètres indépendants dont l'un est ainsi un paramètre $\beta_1$ inversement proportionnel à la conductivité thermique $k$, et $\beta_2$ un paramètre proportionnel à la diffusivité thermique $a$ ( $\beta_1 = \dfrac{g}{4\pi k}$ et $\beta_2 = \dfrac{a}{d^2}$ ), l'écart entre les $F$ températures théoriques obtenues par cette formule (notées $\{\eta(d,t_i,\beta_1,\beta_2)\}_{i\in[1,F]}$) et les $F$ températures effectivement mesurées $\{Y(d,t_i)=\theta_{int}(d,t)-\theta_0\}_{i\in[1,F]}$ à minimiser est un écart quadratique exprimé par la formule $J(\beta_1,\beta_2) = \sum\limits_{i=1}^{F} \left( Y(d,t_i) - \eta(d,t_i,\beta_1,\beta_2) \right)^2$ .

Les F points de comparaison sont pris à des instants différents $t_i$ (i=1 à F) du signal. Les meilleures estimations des paramètres (notées « ^ ») sont alors telles que :

$$\left(\hat{\beta}_1, \hat{\beta}_2\right) = \text{arguments}\left\{\text{minimum}\left(J(\beta_1,\beta_2)\right)\right\}$$

Il s'agit donc d'une estimation du type 'moindres carrés ordinaires'. La faisabilité de l'estimation simultanée des deux paramètres a été démontrée par une analyse préalable de sensibilité qui a montré que chaque paramètre avait une influence suffisamment importante et indépendante sur le modèle.

Les estimations $\beta$, et $\hat{\beta}_2$ permettent de déduire les valeurs cherchées de conductivité $k$ et de diffusivité a, ainsi que leur intervalle de confiance.

L'estimation de l'incertitude sur les paramètres estimés se fait selon la méthode des sensibilités. Si le bruit de mesure est aléatoire, gaussien centré d'écart type $\sigma$ constant, on peut déterminer la matrice de variance-covariance des paramètres estimés. Si l'on note X la matrice de sensibilités aux paramètres nous obtenons :

$$\begin{bmatrix} \sigma^2_{\hat{\beta}_1} & \text{cov}(\hat{\beta}_1,\hat{\beta}_1) \\ \text{cov}(\hat{\beta}_1,\hat{\beta}_1) & \sigma^2_{\hat{\beta}_1} \end{bmatrix} = \sigma^2 (X^T X)^{-1}$$

L'écart type ainsi obtenu est assimilé à l'incertitude u(b) sur le paramètre b. On peut considérer qu'il s'agit d'une incertitude de type A, celle-ci résultant d'un calcul statistique. Dans notre cas, l'incertitude composée est calculée telle que :

$$\frac{u(k)}{k} = \sqrt{\left(\frac{u(g)}{g}\right)^2 + \left(\frac{u(\beta_1)}{\beta_1}\right)^2}$$

$$\frac{u(a)}{a} = \sqrt{2\left(\frac{u(d)}{d}\right)^2 + \left(\frac{u(\beta_2)}{\beta_2}\right)^2}$$

Pour une estimation précise on doit connaître et contrôler de manière la moins incertaine possible :

- la distance de la source 4 au capteur 1, 2, 3 (à contrôler à la fabrication, figée après) ;
- l'uniformité de la source 4 de chaleur linéique g => matériau homogène, de diamètre constant, non écroui de manière à avoir une résistance parfaitement homogène le long du fil (résistance linéaire). Le diamètre du fil doit être comparable à celui du thermocouple (inertie).

*Exemple d'estimation de paramètres thermophysiques*

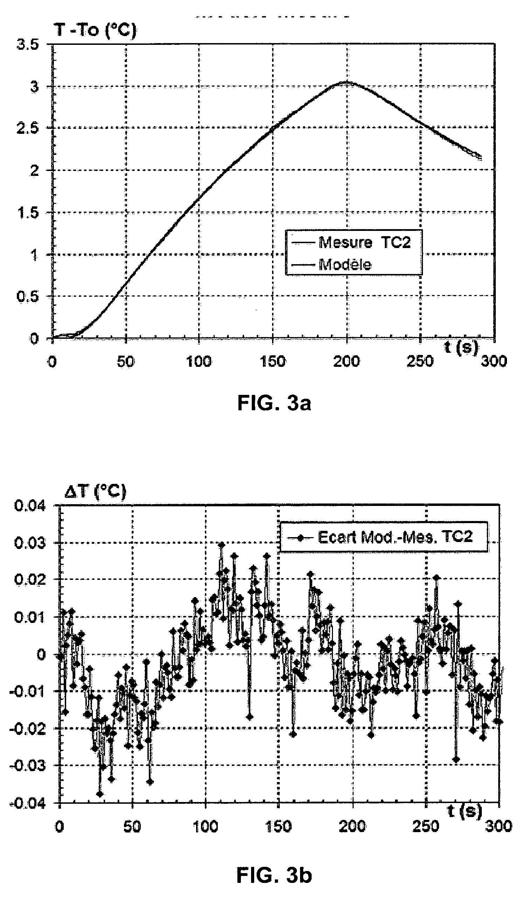

La figure 3a montre sur un même graphique $\theta - \theta_0$ théorique et mesuré en fonction du temps. Les deux courbes sont quasiment superposées.

L'écart ($\eta$-Y) pour les paramètres $\beta_1$ et $\beta_2$ optimaux est représenté sur la figure 3b. Comme l'on voit, cet écart ne dépasse jamais 0,04°C en valeur absolue. L'incertitude sur les paramètres identifiés (voir ci-dessous) est donc particulièrement faible.

| Paramètres | Valeurs |
|---|---|
| $\beta_1$ | 2.36825962 |
| $\beta_2$ | 0.004711 |
| Résidu (°C$^2$) | 0.033135 |
| Moyenne (°C) | -0.0022 |
| Ecart-type (°C) | 0.0118 |
| d (mm) | 10 |
| a ($m^2.s^{-1}$) | 4.7112$^E$-07 |
| k ($W.m^{-1}.K^{-1}$) | 0.884 |

$$k = \frac{g}{4\pi\beta_1} \quad a = d^2\beta_2$$

k = 0.88$\pm$0.08W.m$^{-1}$.°C$^{-1}$(intervalle de confiance de 99%)
a = (4.7 $\pm$ 0.1) $\times$ 10$^{-7}$ m$^2$.s$^{-1}$ (intervalle deconfiance de 99%)

*Procédé de mesure du flux de chaleur*

Selon un deuxième aspect, l'invention concerne un procédé de mesure d'un flux de chaleur $\varphi$(t) traversant une surface r du matériau $\Omega$ dans lequel on utilise les paramètres themophysiques précédemment estimés.
La distance entre l'au moins un capteur de température 1, 2, 3 et la surface $\Gamma$ du matériau $\Omega$ traversée par le flux de chaleur doit être connue.
Le procédé comprend des étapes de :

- Mesure au cours du temps d'une pluralité de températures internes du matériau $\Omega$ par l'au moins un capteur de température 1, 2, 3,
- estimation de la conductivité thermique *k* et de la diffusivité thermique *a* du matériau $\Omega$ par la mise en oeuvre du procédé d'estimation des propriétés thermophysiques d'un matériau $\Omega$ précédemment expliqué;
- détermination du flux de chaleur $\varphi$(t) traversant la surface r du matériau $\Omega$ à partir des températures internes mesurées en fonction du temps par l'au moins un capteur de température 1, 2, 3, de la conductivité thermique *k* et de la diffusivité thermique *a* estimées du matériau $\Omega$.

Le couplage mesure de flux de chaleur/estimation des propriétés thermophysiques peut être effectué pendant un essai. Un pic de puissance pendant un temps donné est généré dans le fil chauffant 4 sur une période où le flux de chaleur transmis dans le matériau est constant. Les nouvelles conductivités et diffusivités sont alors estimées à l'aide du principe de superposition. Pratiquement, on ôte du signal la composante due au flux de chaleur pour ne conserver que la perturbation due au fil chauffant. Les nouveaux paramètres thermophysiques sont alors réinjectées dans l'algorithme d'inversion de la température pour le calcul du flux tel que décrit précédemment.
Pour estimer le flux de chaleur traversant la surface r du matériau $\Omega$, la procédure consiste avantageusement à aller chercher dans une base de données la réponse indicielle pour chaque couple conductivité et diffusivité fonction de la température interne du capteur de température, et à l'inverser pour résoudre la formule $\Delta\theta = D \cdot Q$ mentionnée précédemment. Il est aussi possible de recalculer cette réponse à chaque mise en oeuvre du procédé.

*Vérification des conditions aux limites fixées*

Le modèle utilisé suppose qu'une condition dite de milieu « semi-infini » est vérifié, en d'autres termes que le matériau $\Omega$ occupe la totalité du demi-espace situé d'un coté de la surface $\Gamma$ (en l'espèce $\{(x,y,z) \in R^3, x \geq 0\}$). En réalité,

le matériau est limité par sa face arrière, et la condition de milieu semi-infini peut n'être plus respectée.

De façon avantageuse, au moins deux températures internes sont mesurées au cours du temps par au moins deux capteurs de température, l'un 3 étant sensiblement plus éloigné de la surface Γ du matériau Ω traversée par le flux de chaleur φ(t) que l'autre (1, en référence à la figure 1), le procédé comprenant alors en outre une étape de vérification de la condition aux limites à partir de la température interne mesurée en fonction du temps par le capteur de température 3 le plus éloigné de la surface r du matériau Ω.

A présent vont être décrits une pluralité de mode de réalisation du fluxmètre 10 selon l'invention, en fonction du nombre de capteurs de température qu'il comprend.

*Premier mode de réalisation du fluxmètre : un capteur de température*

Le fluxmètre 10 peut ne comprendre qu'un capteur de température. Dans ce cas, il s'agit du capteur 1 de la figure 1. Ce dernier doit être à une distance connue à la fois de la surface Γ et de la source ponctuelle 4. Ce mode de réalisation permet un fluxmètre très compact et peu invasif. Il est toutefois limité car il ne peut à la fois mesurer le flux de chaleur φ(t) et estimer les propriétés thermophysiques du matériau Ω. La mesure du flux se fait en effet lors de phases pendant lesquelles la source 4 est éteinte, alors que l'estimation des propriétés nécessite cette source 4 allumée. Elle se fait lors de phases stationnaires pendant lesquelles le flux de chaleur transmis dans le matériau est constant.

*Deuxième mode de réalisation du fluxmètre : deux capteurs de température*

De façon plus avantageuse, le fluxmètre 10 comprend un premier capteur de température 1 et un deuxième capteur de température (capteur 2 ou 3 de la figure 1), le premier capteur de température 1 étant plus proche de la surface du matériau Ω traversée par le flux de chaleur φ(t) que le deuxième capteur de température 2, 3.

Dans ce cas, c'est le premier capteur de température 1 qui est à une distance connue de la surface Γ du matériau Ω traversée par le flux de chaleur φ(t), alors que c'est le deuxième capteur de température 2, 3 qui est à une distance connue de la source ponctuelle de chaleur 4. Les deux capteurs sont avantageusement relativement éloignés pour être les plus indépendants possibles.

Le premier capteur 1 est dédié à la mesure du flux de chaleur φ(t) puisque c'est celui qui est le plus proche de la surface. Le deuxième capteur 2, 3 est quant à lui dédié à l'estimation des propriétés thermophysiques du matériau Ω. Chaque capteur peut prendre des mesures indépendamment de l'autre, et le couplage mesure de flux de chaleur/estimation des propriétés thermophysiques peut être effectué en temps réel. Pratiquement, on peut ôter de la mesure du deuxième capteur 2, 3 la composante due au flux de chaleur pour ne conserver que la perturbation due à la source 4, et réciproquement on peut ôter de la mesure du premier capteur 1 la composante due à la source de chaleur 4 lorsqu'elle est active pour ne conserver que la perturbation due au flux de chaleur.

Toutefois, de façon particulièrement préférée, les mesures du deuxième capteur 2, 3 sont également utilisées pour l'estimation du flux de chaleur φ(t) lorsque la source ponctuelle 4 est désactivée. Avec deux capteurs, on élimine en grande partie des imprécisions dues par exemple à des imperfections du matériau Ω.

*Troisième mode de réalisation du fluxmètre : trois capteurs de température*

De façon encore plus avantageuse, le fluxmètre 10 est conforme à la figure 1 : il comprend un troisième capteur de température 3. Ce dernier est comme expliqué précédemment sensiblement plus éloigné de la surface r du matériau Ω traversée par le flux de chaleur φ(t) que les premier et deuxième capteurs 1 et 2. Les mesures du troisième capteur 3 sont utilisées pour connaître une condition aux limites du matériau r.

Le troisième capteur de température 3 est avantageusement un « second » deuxième capteur : à condition qu'il soit à une distance connue de la source ponctuelle de chaleur 4 (en particulier la même que le deuxième capteur de température 2, afin de faciliter les calculs), des mesures du troisième capteur 3 peuvent être comparées avec des mesures du deuxième capteur 2 afin de confirmer les estimations de paramètres thermophysiques et contrôler l'homogénéité du matériau r.

Il est à noter que le fluxmètre 10 peut comprendre plus que trois capteurs de température : on peut envisager une pluralité de « premiers » capteurs 1, et/ou une pluralité de « deuxièmes » capteurs 2, et/ou une pluralité de « troisièmes » capteurs 3.

*Exemple de mesure du flux de chaleur*

L'invention a été testée sur des essais de qualification spécifiques mettant en jeu deux types de source de chaleur (homogène et non-homogène) :

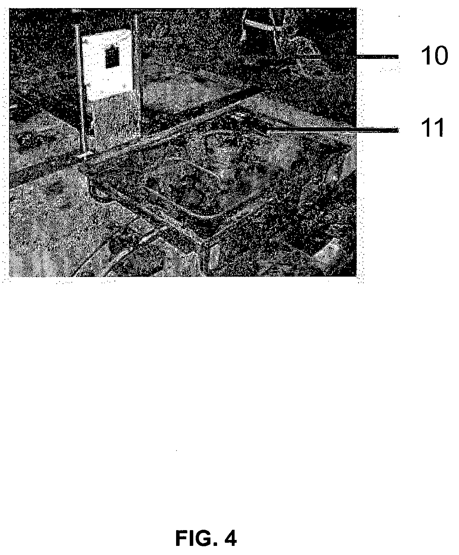

- source homogène (la surface du fluxmètre est en contact avec une résistance chauffante ou exposée devant un corps noir) ;
- source non-homogène (la surface du fluxmètre est exposée par exemple à une flamme de brûleur à gaz 11 en référence à la figure 4).

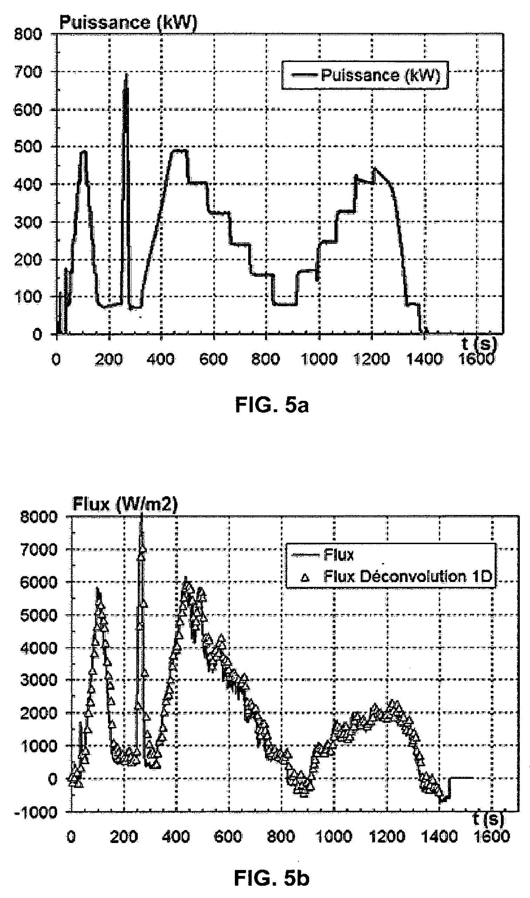

La Figure 5a présente le profil de puissance thermique à laquelle est soumis le matériau $\Omega$ équipé du fluxmètre 10 selon l'invention, lors d'un test de qualification avec le brûleur à gaz 11. La puissance du feu est pilotée par la variation du débit de gaz injecté. Le fluxmètre 11 a permis d'estimer le flux de chaleur $\Phi$ (c'est le flux surfacique $\varphi_{surf}$ (t) qui est représenté sur la figure 5b) qui traverse la surface r du matériau $\Omega$ ainsi que de caractériser la conductivité $k$ et la diffusivité a du matériau $\Omega$ à l'aide de la source chauffante 4. Le couplage mis en oeuvre par l'invention permet une meilleure estimation du flux de chaleur car il prend en compte l'évolution des propriétés. Cette évolution peut être caractérisée entre chaque essai (régime stationnaire) pour tenir compte du vieillissement du matériau ou pendant l'utilisation pour tenir compte de l'évolution des propriétés thermophysiques en fonction de la température.

*Applications*

Etant robuste, intégré in-situ au matériau et ayant un processus métrologique maîtrisé, le fluxmètre 10 selon l'invention peut être utilisé dans de nombreux domaines :

- pour des thématiques liées ou non à l'incendie et pour des recherches sur l'interaction milieu/paroi en environnement agressif thermiquement et chimiquement ;
- pour des mesures directes de flux de chaleur ou pour le suivi de l'évolution du flux de chaleur sur de longues durées (application au vieillissement thermique des matériaux sur des échelles de temps étendues).

De plus, il peut être utilisé comme norme du bâtiment. Les thermocouples et le fil chauffant implantés dans les murs des matériaux de construction peuvent servir :

- à établir un bilan énergétique précis d'un bâtiment pour évaluer notamment sa classe d'isolation ;
- à établir un bilan énergétique en temps réel de manière à mettre en oeuvre les régulations nécessaires pour maintenir une température de confort ;
- à suivre dans le temps la dégradation des propriétés thermiques des murs : dessiccation, infiltrations d'eau, dégradations des isolations existantes ;
- à déterminer l'état thermodynamique d'un local en feu équipé de ce fluxmètre (pré-flashover, flashover, post-flashover) permettant la gestion de crise par les unités d'interventions en cas d'incendie ;
- de détecteur incendie au même titre que d'autres organes de sécurité tels que des détecteurs de fumées.

## Revendications

1. Procédé d'estimation des propriétés thermophysiques d'un matériau ($\Omega$), au moins un capteur de température (1, 2, 3) et une source ponctuelle de chaleur (4) étant intégrés dans ledit matériau ($\Omega$), la distance entre l'au moins un capteur de température (1, 2, 3) et la source ponctuelle de chaleur (4) étant connue, le procédé comprenant des étapes de :

   - expression de la température théorique en fonction du temps au niveau de l'au moins un capteur de température (1, 2, 3) lorsque la source ponctuelle de chaleur (4) est activée, ladite expression dépendant des paramètres thermophysiques du matériau ($\Omega$) ;
   - acquisition d'une pluralité de mesures de température par l'au moins un capteur de température (1, 2, 3) au cours d'un intervalle de temps pendant lequel la source ponctuelle de chaleur (4) est activée ;
   - détermination des valeurs des paramètres thermophysiques du matériau ($\Omega$) telles que l'écart entre les températures théoriques obtenues via ladite expression et les températures effectivement mesurées soit minimal.

2. Procédé selon la revendication 1, dans lequel lesdites propriétés thermophysiques du matériau ($\Omega$) comprennent la conductivité thermique k du matériau ($\Omega$) et/ou la diffusivité thermique a du matériau ($\Omega$).

3. Procédé selon la revendication 2, dans lequel l'écart entre les $F$ températures théoriques obtenues $\{\eta(d,t_i,\beta_1,\beta_2)\}_{i\in[1,F]}$ et les $F$ températures effectivement mesurées $\{Y(d,t_i)\}_{i\in[1,F]}$ à minimiser est exprimé par la formule

$$J(\beta_1, \beta_2) = \sum_{i=1}^{F} \left( Y(d, t_i) - \eta(d, t_i, \beta_1, \beta_2) \right)^2$$ , $d$ étant ladite distance entre l'au moins un capteur de température (1, 2, 3) et la source ponctuelle de chaleur (4), $\beta_1$ étant un paramètre inversement proportionnel à la conductivité thermique $k$, et $\beta_2$ étant un paramètre proportionnel à la diffusivité thermique a.

4. Procédé de mesure d'un flux de chaleur ($\varphi(t)$) traversant une surface ($\Gamma$) d'un matériau ($\Omega$), au moins un capteur de température (1, 2, 3) et une source ponctuelle de chaleur (4) étant intégrés dans ledit matériau, la distance entre l'au moins un capteur de température (1, 2, 3) et la source ponctuelle de chaleur (4) et la distance entre l'au moins un capteur de température (1, 2, 3) et la surface ($\Gamma$) du matériau ($\Omega$) traversée par le flux de chaleur ($\varphi(t)$) étant connues, le procédé comprenant des étapes de :

- Mesure au cours du temps d'une pluralité de températures internes du matériau ($\Omega$) par l'au moins un capteur de température (1, 2, 3) ;
- estimation de la conductivité thermique $k$ et de la diffusivité thermique a du matériau ($\Omega$) par la mise en oeuvre du procédé d'estimation des propriétés thermophysiques d'un matériau ($\Omega$) selon l'une des revendications 2 à 3 ;
- détermination du flux de chaleur ($\varphi(t)$) traversant la surface ($\Gamma$) du matériau ($\Omega$) à partir des températures internes mesurées en fonction du temps par l'au moins un capteur de température (1, 2, 3), de la conductivité thermique k et de la diffusivité thermique a estimées du matériau ($\Omega$).

5. Procédé selon la revendication 4, au moins deux températures internes sont mesurées au cours du temps par au moins deux capteurs de température (1, 2, 3), l'un (3) étant sensiblement plus éloigné de la surface ($\Gamma$) du matériau ($\Omega$) traversée par le flux de chaleur ($\varphi(t)$) que l'autre (1, 2), le procédé comprenant en outre une étape de vérification de la condition aux limites à partir de la température interne mesurée en fonction du temps par le capteur de température (3) le plus éloigné de la surface ($\Gamma$) du matériau ($\Omega$).

6. Fluxmètre (10) pour la mesure d'un flux de chaleur ($\varphi(t)$) traversant une surface ($\Gamma$) d'un matériau ($\Omega$) **caractérisé en ce qu**'il comprend :

- au moins un capteur de température (1, 2, 3) intégrable dans un échantillon du matériau ($\Omega$) ;
- une source ponctuelle de chaleur (4) contrôlable, également intégrable dans l'échantillon du matériau ($\Omega$) ;
- des moyens d'acquisition d'une pluralité de mesures de température par l'au moins un capteur de température (1, 2, 3) au cours d'un intervalle de temps ;
- des moyens de traitement de la pluralité de mesures de température acquises aptes à mettre en oeuvre le procédé de mesure d'un flux de chaleur ($\varphi(t)$) traversant la surface ($\Gamma$) dudit matériau ($\Omega$) selon la revendication 4.

7. Fluxmètre selon la revendication 6, comprenant un premier capteur de température (1) et un deuxième capteur de température (2, 3), le premier capteur de température (1) étant plus proche de la surface ($\Gamma$) du matériau ($\Omega$) traversée par le flux de chaleur ($\varphi(t)$) que le deuxième capteur de température (2, 3), le premier capteur de température (1) étant à une distance connue de la surface ($\Gamma$) du matériau ($\Omega$) traversée par le flux de chaleur ($\varphi(t)$), le deuxième capteur de température (2, 3) étant à une distance connue de la source ponctuelle de chaleur (4), les mesures du premier capteur (1) étant utilisées pour l'estimation du flux de chaleur ($\varphi(t)$), et les mesures du deuxième capteur (2, 3) étant utilisées pour l'estimation des propriétés thermophysiques du matériau ($\Omega$).

8. Fluxmètre selon la revendication 7, comprenant un troisième capteur de température (3), de position par rapport à la surface connue, le troisième capteur de température (3) étant sensiblement plus éloigné de la surface ($\Gamma$) du matériau ($\Omega$) traversée par le flux de chaleur ($\varphi(t)$) que les premier et deuxième capteurs (1, 2), les mesures du troisième capteur (3) étant utilisées pour connaître une condition aux limites du matériau ($\Gamma$).

9. Fluxmètre selon la revendication 8, dans lequel le troisième capteur de température (3) est à une distance connue de la source ponctuelle de chaleur (4), en particulier la même que le deuxième capteur de température (2), des mesures du troisième capteur (3) étant comparées avec des mesures du deuxième capteur (2) afin de contrôler l'homogénéité du matériau ($\Gamma$).

10. Fluxmètre selon l'une des revendications 7 à 9, dans lequel les mesures du deuxième capteur (2) sont également utilisées pour l'estimation du flux de chaleur ($\varphi(t)$) lorsque la source ponctuelle (4) est désactivée.

**11.** Fluxmètre selon l'une des revendications 6 à 10, dans lequel le ou les capteurs de température (1, 2, 3) sont des thermocouples et la source ponctuelle de chaleur (4) est un fil chauffant, les axes des thermocouples et du fil chauffant étant situés sensiblement sur le même plan perpendiculaire à la surface (Γ) du matériau (Ω).

**Patentansprüche**

**1.** Verfahren zum Schätzen der thermophysikalischen Eigenschaften eines Materials (Ω), wobei mindestens ein Temperatursensor (1, 2, 3) und eine punktuelle Wärmequelle (4) in das Material (0) integriert sind, wobei der Abstand zwischen dem mindestens einen Temperatursensor (1, 2, 3) und der punktuellen Wärmequelle (4) bekannt ist, wobei das Verfahren die folgenden Schritte umfasst:

- Exprimieren der theoretischen Temperatur je nach der Zeit auf der Ebene des mindestens einen Temperatursensors (1, 2, 3), wenn die punktuelle Wärmequelle (4) aktiviert ist, wobei das Exprimieren von den thermophysikalischen Parametern des Materials (Ω) abhängt;
- Erfassen einer Vielzahl von Temperaturmessungen durch mindestens den einen Temperatursensor (1, 2, 3) im Laufe eines Zeitintervalls, während dessen die punktuelle Wärmequelle (4) aktiviert ist;
- Bestimmen der Werte der thermophysikalischen Parameter des Materials (Ω), so dass der Abstand zwischen den theoretischen Temperaturen, erhalten mit Hilfe des Exprimierens, und den tatsächlich gemessenen Temperaturen minimal ist.

**2.** Verfahren nach Anspruch 1, wobei die thermophysikalischen Eigenschaften des Materials (Ω) die thermische Leitfähigkeit $k$ des Materials (Ω) und/oder die thermische Diffusionsfähigkeit $a$ des Materials (Ω) umfassen.

**3.** Verfahren nach Anspruch 2, wobei der Abstand zwischen den F erhaltenen theoretischen Temperaturen $\{\eta(d,t_i,\beta_1,\beta_2)\}_{i\in[1,F]}$ und den F tatsächlich gemessenen Temperaturen $\{Y(d,t_i)\}_{i\in[1,F]}$, der minimiert werden soll, durch die Formel $\sum_{i=1}^{F}\left(Y(d,t_i)-\eta(d,t_i,\beta_1,\beta_2)\right)^2$ exprimiert wird, wobei $d$ der Abstand zwischen dem mindestens einen Temperatursensor (1, 2, 3) und der punktuellen Wärmequelle (4) ist, wobei $\beta_1$ ein umgekehrt proportionaler Parameter zur thermischen Leitfähigkeit $k$ ist und $\beta_2$ ein proportionaler Parameter zur thermischen Diffusionsfähigkeit $a$ ist.

**4.** Verfahren zum Messen eines Wärmeflusses ($\varphi(t)$), der eine Fläche (Γ) eines Materials (Ω) durchquert, wobei mindestens ein Temperatursensor (1, 2, 3) und eine punktuelle Wärmequelle (4) in das Material integriert sind, wobei der Abstand zwischen dem mindestens einen Temperatursensor (1, 2, 3) und der punktuellen Wärmequelle (4) und der Abstand zwischen dem mindestens einen Temperatursensor (1, 2, 3) und der Fläche (Γ) des Materials (Ω), die vom Wärmefluss ($\varphi(t)$) durchquert wird, bekannt sind, wobei das Verfahren die folgenden Schritte umfasst:

- Messen, im Laufe der Zeit, einer Vielzahl von inneren Temperaturen des Materials (Ω) durch den mindestens einen Temperatursensor (1, 2, 3);
- Schätzen der thermischen Leitfähigkeit $k$ und der thermischen Diffusionsfähigkeit $a$ des Materials (Ω) durch die Durchführung des Verfahrens zum Schätzen der thermophysikalischen Eigenschaften eines Materials (Ω) nach einem der Ansprüche 2 bis 3;
- Bestimmen des Wärmeflusses ($\varphi(t)$), der die Fläche (Γ) des Materials (Ω) durchquert, auf der Grundlage der inneren Temperaturen, gemessen je nach der Zeit durch den mindestens einen Temperatursensor (1, 2, 3), der geschätzten thermischen Leitfähigkeit $k$ und thermischen Diffusionsfähigkeit $a$ des Materials (Ω).

**5.** Verfahren nach Anspruch 4, wobei mindestens zwei innere Temperaturen im Laufe der Zeit durch mindestens zwei Temperatursensoren (1, 2, 3) gemessen werden, wobei einer (3) im Wesentlichen weiter von der Fläche (Γ) des Materials (Ω), das vom Wärmefluss ($\varphi(t)$) durchquert wird, als der andere (1, 2) entfernt ist, wobei das Verfahren außerdem einen Schritt des Überprüfens des Zustands an den Grenzen auf der Grundlage der inneren Temperatur umfasst, der je nach der Zeit durch den Temperatursensor (3) gemessen wird, der am weitesten von der Fläche (Γ) des Materials (Ω) entfernt ist.

**6.** Durchflussmesser (10) zum Messen eines Wärmeflusses ($\varphi(t)$), der die Fläche (Γ) des Materials (Ω) durchquert, **dadurch gekennzeichnet, dass** er Folgendes umfasst:

- mindestens einen Temperatursensor (1, 2, 3), der in eine Probe des Materials ($\Omega$) integriert werden kann;
- eine kontrollierbare punktuelle Wärmequelle (4), die ebenfalls in eine Probe des Materials ($\Omega$) integriert werden kann;
- Mittel zum Erfassen einer Vielzahl von Temperaturmessungen durch den mindestens einen Temperatursensor (1, 2, 3) im Laufe eines Zeitintervalls;
- Mittel zum Verarbeiten der Vielzahl von erfassten Temperaturmessungen, die geeignet sind, das Verfahren zum Messen eines Wärmeflusses ($\varphi(t)$), der die Fläche ($\Gamma$) des Materials ($\Omega$) durchquert, gemäß Anspruch 4 durchzuführen.

7. Durchflussmesser nach Anspruch 6, umfassend einen ersten Temperatursensor (1) und einen zweiten Temperatursensor (2, 3), wobei der erste Temperatursensor (1) näher an der Fläche ($\Gamma$) des Materials ($\Omega$), die vom Wärmefluss ($\varphi(t)$) durchquert wird, als der zweite Temperatursensor (2, 3) ist, wobei sich der erste Temperatursensor (1) in einem bekannten Abstand von der Fläche ($\Gamma$) des Materials ($\Omega$), das vom Wärmefluss ($\varphi(t)$) durchquert wird, befindet, wobei sich der zweite Temperatursensor (2, 3) in einem bekannten Abstand von der punktuellen Wärmequelle (4) befindet, wobei die Messungen des ersten Sensors (1) für die Schätzung des Wärmeflusses ($\varphi(t)$) verwendet werden, und die Messungen des zweiten Sensors (2, 3) für die Schätzung der thermophysikalischen Eigenschaften des Materials ($\Omega$) verwendet werden.

8. Durchflussmesser nach Anspruch 7, umfassend einen dritten Temperatursensor (3) mit einer Position mit Bezug auf die bekannte Fläche, wobei der dritte Temperatursensor (3) im Wesentlichen weiter von der Fläche ($\Gamma$) des Materials ($\Omega$), die vom Wärmefluss ($\varphi(t)$) durchquert wird, als der erste und der zweite Sensor (1, 2) entfernt ist, wobei die Messungen des dritten Sensors (3) verwendet werden, um einen Zustand an den Grenzen des Materials ($\Gamma$) zu kennen.

9. Durchflussmesser nach Anspruch 8, wobei sich der dritte Temperatursensor (2, 3) in einem bekannten Abstand von der punktuellen Wärmequelle (4) befindet, insbesondere dem gleichen wie der zweite Temperatursensor (2), wobei Messungen des dritten Sensors (3) mit Messungen des zweiten Sensors (2) verglichen werden, um die Homogenität des Materials ($\Gamma$) zu kontrollieren.

10. Durchflussmesser nach einem der Ansprüche 7 bis 9, wobei die Messungen des zweiten Sensors (2) ebenfalls für die Schätzung des Wärmeflusses ($\varphi(t)$) verwendet werden, wenn die punktuelle Quelle (4) deaktiviert ist.

11. Durchflussmesser nach einem der Ansprüche 6 bis 10, wobei der oder die Temperatursensoren (1, 2, 3) Thermopaare sind und die punktuelle Wärmequelle (4) ein Heizdraht ist, wobei die Achsen der Thermopaare und des Heizdrahts im Wesentlichen auf der gleichen senkrechten Ebene zur Fläche ($\Gamma$) des Materials ($\Omega$) angeordnet sind.

## Claims

1. A process for estimation of the thermophysical properties of material ($\Omega$), at least one temperature sensor (1, 2, 3) and one point heat source (4) being integrated into said material ($\Omega$), the distance between the at least one temperature sensor (1, 2, 3) and the point heat source (4) being known, the process comprising steps of:

   - expression of the theoretical temperature as a function of time at the level of the at least one temperature sensor (1, 2, 3) when the point heat source (4) is activated, said expression dependent on the thermophysical parameters of the material (Q);
   - acquisition of a plurality of temperature measurements by the at least one temperature sensor (1, 2, 3) during a time interval during which the point heat source (4) is activated;
   - determination of the values of the thermophysical parameters of the material ($\Omega$) such that the deviation between the theoretical temperatures obtained via said expression and the temperatures effectively measured is minimal.

2. The process according to claim 1, wherein said thermophysical properties of the material ($\Omega$) comprise the thermal conductivity $k$ of the material ($\Omega$) and/or the thermal diffusivity a of the material ($\Omega$).

3. The process according to claim 2, wherein the deviation between the $F$ theoretical temperatures obtained $\{\eta(d,t_i,\beta_1,\beta_2)\}_{i\in[1,F]}$ and the effectively measured $F$ temperatures $\{Y(d,t_i)\}_{i\in[1,F]}$ to be minimised is expressed by the

formula $J(\beta_1, \beta_2) = \sum_{i=1}^{F} \left(Y(d, t_i) - \eta(d, t_i, \beta_1, \beta_2)\right)^2$, $d$ being said distance between the at least one temperature sensor (1, 2, 3) and the point heat source (4), $\beta_1$ being a parameter inversely proportional to the thermal conductivity $k$, and $\beta_2$ being a parameter proportional to the thermal diffusivity a.

4. A measurement process of heat flow ($\varphi(t)$) passing through a surface ($\Gamma$) of a material ($\Omega$), at least one temperature sensor (1, 2, 3) and one point heat source (4) being integrated into said material, the distance between the at least one temperature sensor (1, 2, 3) and the point heat source (4) and the distance between the at least one temperature sensor (1, 2, 3) and the surface ($\Gamma$) of the material ($\Omega$) passed through by the heat flow ($\varphi(t)$) being known, the process comprising steps of:

   - measurement over time of a plurality of internal temperatures of the material ($\Omega$) by the at least one temperature sensor (1, 2, 3);
   - estimation of the thermal conductivity $k$ and of the thermal diffusivity $a$ of the material ($\Omega$) by the execution of the process for estimation of the thermophysical properties of a material ($\Omega$), according to one of claims 2 to 3;
   - determination of the heat flow ($\varphi(t)$) passing through the surface ($\Gamma$) of the material ($\Omega$) from the internal temperatures measured as a function of time by the at least one temperature sensor (1, 2, 3), of the estimated thermal conductivity $k$ and the thermal diffusivity $a$ of the material ($\Omega$).

5. The process according to claim 4, at least two internal temperatures are measured over time by at least two temperature sensors (1, 2, 3), one (3) being substantially further away from the surface ($\Gamma$) of the material ($\Omega$) passed through by the heat flow ($\varphi(t)$) than the other (1, 2), the process also comprising a verification step of the condition on the limits from the internal temperature measured as a function of time by the temperature sensor (3) further away from the surface ($\Gamma$) of the material ($\Omega$).

6. A flow meter (10) for measurement of heat flow ($\varphi(t)$) passing through a surface ($\Gamma$) of a material ($\Omega$) **characterised in that** it comprises:

   - at least one temperature sensor (1, 2, 3) that can be integrated into a sample of the material ($\Omega$);
   - a controllable point heat source (4), that can also be integrated into the sample of the material ($\Omega$);
   - means of acquisition of a plurality of temperature measurements by the at least one temperature sensor (1, 2, 3) during a time interval;
   - processing means of the plurality of acquired temperature measurements capable of executing the process for measurement of heat flow ($\varphi(t)$) passing through the surface ($\Gamma$) of said material ($\Omega$), according to claim 4.

7. The flow meter according to claim 6, comprising a first temperature sensor (1) and a second temperature sensor (2, 3), the first temperature sensor (1) being closer to the surface ($\Gamma$) of the material ($\Omega$) passed through by the heat flow ($\varphi(t)$) than the second temperature sensor (2, 3), the first temperature sensor (1) being at a known distance from the surface ($\Gamma$) of the material ($\Omega$) passed through by the heat flow ($\varphi(t)$), the second temperature sensor (2, 3) being at a known distance from the point heat source (4), the measurements of the first sensor (1) being used for estimation of the heat flow ($\varphi(t)$), and the measurements of the second sensor (2, 3) being used for estimation of the thermophysical properties of the material ($\Omega$).

8. The flow meter according to claim 7, comprising a third temperature sensor (3), of position relative to the known surface, the third temperature sensor (3) being substantially further away from the surface ($\Gamma$) of the material ($\Omega$) passed through by the heat flow ($\varphi(t)$) than the first and second sensors (1, 2), the measurements of the third sensor (3) being used to understand a condition on the limits of the material ($\Omega$).

9. The flow meter according to claim 8, wherein the third temperature sensor (3) is at a known distance from the point heat source (4), in particular the same as the second temperature sensor (2), measurements of the third sensor (3) being compared to measurements of the second sensor (2) to control the homogeneity of the material ($\Gamma$).

10. The flow meter according to one of claims 7 to 9, wherein the measurements of the second sensor (2) are also used for estimation of the heat flow ($\varphi(t)$) when the point source (4) is deactivated.

11. The flow meter according to one of claims 6 to 10, wherein the temperature sensor or temperature sensors (1, 2, 3) are thermocouples and the point heat source (4) is a heater wire, the axes of the thermocouple and the heater wire being located substantially in the same plane perpendicular to the surface ($\Gamma$) of the material ($\Omega$).

**FIG. 1**

Mesures données par les thermocouples $\theta_{int}$ → **Modèle Numérique Inverse** →

*Estimation du flux de chaleur*

Flux de chaleur dans le matériau $\varphi$ (W.m$^{-2}$)

*Estimation de paramètres* $\{$ Conductivité et diffusivité $(\alpha, \lambda)$ → $f(t, \theta)$

**couplage**

fonction du temps (stress thermique) et de la température

**FIG. 2**

FIG. 3a

FIG. 3b

10

11

**FIG. 4**

**FIG. 5a**

**FIG. 5b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 7146189 B
- JP 2002131258 A
- US 5112136 A
- US 2010080260 A